# EUROPEAN PATENT APPLICATION

(11) **EP 4 549 658 A1**
(43) Date of publication of application: **07.05.2025**
(21) Application number: 23832001.4
(22) Date of filing: 29.06.2023
(51) Int. Cl.: E01F 15/14, B60R 19/00, B32B 3/12

(54) **ENERGY-ABSORBING CARTRIDGE**

(30) Priority: 30.06.2022 RU 2022117857
(71) Applicant: Tovarishchestvo S Ogranichennoi Otvetstvennostiu "SP PMK", Karaganda, 100000 (KZ)
(72) Inventor: NEMOV, Ivan Petrovich, Moscow, 107241 (RU); KURBANOV, Eldar Rashitovich, Samarskaya obl. 443095 (RU); MAKAROV, Georgii Vladimirovich, Samarskaya obl. 443011 (RU)
(74) Representative: Curell Suñol S.L.P.
(86) International application number: PCT/RU2023/050159
(87) International publication number: WO 2024/005675

(57) **Abstract**

An energy-absorbing cartridge is made in the form of a honeycomb structure, the cells of which are made in the form of rectangular hexagonal prisms. The said cells are formed by three-sided sheet elements (1) with bent flanges intended for connecting adjacent sheet elements. The problem to be solved by the invention is to increase the efficiency of deformation cartridges. The technical result of the invention is to increase the overall energy capacity due to the appearance of additional deformation points.

## Description

### The field of art to which the invention relates.

The invention relates to the field of road construction, in particular, to energy-absorbing cartridges that provide stopping or redirecting (correcting) the trajectory of a vehicle, ensuring safety for road users, as well as the safety of elements of the road construction. The energy-absorbing cartridge can be used as part of a road frontal impact attenuator, end terminal, truck mounted and trailer mounted impact attenuator, mobile and stationary road buffers.

### Prior art.

Energy-absorbing cartridges are one of the basic elements of road impact attenuators, wherein the energy-absorbing cartridges are mainly in the form of honeycomb structures. Such structures are used for effective deformation compensation.

Various constructions and methods of manufacturing honeycomb structures are known from the prior art, in particular, a volumetric element and a method of manufacturing honeycomb structures are known (RU 2035313 C1, published 20.05.1995). Various designs of energy-absorbing elements are also known, such as those described in documents CN214033517U, publ. 24.08.2021, and CN104213527A, publ. 17.12.2014.

The honeycomb structures are in the form of prisms and are formed by sheet elements forming at least part of a cell of the honeycomb structure, which are connected to each other by sides.

The main disadvantage of this construction is that in a single honeycomb unit all sides have double or greater thickness. Cellular structures made in this manner are not suitable for gradual directed deformation.

The closest analog is a frontal impact attenuator (KR101376170B1, publ. 19.03.2014). The frontal impact attenuator contains an impact absorbing element installed between the guardrails and reducing the compression force by absorbing the impact and providing a friction force due to elastic compression in case of a vehicle collision. The impact absorbing element contains an energy-absorbing cartridge made in the form of a honeycomb structure, which can be arranged either horizontally or vertically. The honeycomb structure is formed by joining tubular bodies having a hexagonal shape on the front, back, right and left sides and forming honeycombs by fastening them together, for example by welding or adhering.

The main disadvantage of this honeycomb construction is that all sides are of double or greater thickness, which prevents gaining additional bending angles and providing gradual directed deformation. That is, if the honeycomb block is formed in this way, the predicted bending will be at 6 corners, and the deformation of the sides will represent a chaotic order and when a precise direction of this deformation is needed, a guide frame is required. Also, when a force is applied in a plane not coinciding with any of the planes of the sides of the cross-section, oblique bending will occur.

Additionally, it should be noted that such a design does not provide the possibility of obtaining honeycomb blocks with different mechanical and/or thermophysical characteristics on a single side. In case of using in one honeycomb block two materials of different thermophysical characteristics, for example, steel and aluminum alloy, the bimetal effect will occur, where due to the difference in the coefficients of thermal expansion (CTE) of metals when heated, the plate of bimetal bends towards the metal with a lower CTE. In case of using different metals with different electrochemical potentials in one honeycomb block, the galvanic effect occurs.

Thus, the technical problem is the insufficient efficiency of analogs and increased risks for road users.

### Disclosure of the invention.

The problems to be solved by the invention consist in increasing the efficiency of directed deformation of cartridges and providing the possibility of obtaining an adjustable deformation pattern.

The technical result in using the invention is to increase the overall energy capacity due to the appearance of additional deformation points. This will allow, when this cartridge is used in devices such as road frontal impact attenuator, end terminal, truck mounted and trailer mounted frontal impact attenuator, to reduce the length of the device and reduce the value of the generalized inertial overload index or ASI for the people in the vehicle.

The generalized inertial overload index at the center of mass of the vehicle is the Safety Index (Injury Severity Index) or acceleration severity index (ASI). The methods for calculating the safety index or ASI are disclosed in the relevant standards: GOST R 52721-2007 or DIN EN 1317-1:2011-01.

In addition, it is possible to change the force applied to the deformation cartridge, to use materials with different physical and mechanical properties as part of one cartridge, for example, the use of S235 and S345 steels, and, accordingly, to make the deformation of the cartridge more predictable not only at frontal force application, but also at an angle.

The above technical result is achieved due to the fact that the energy-absorbing cartridge is made in the form of a honeycomb structure, the cells of which are made in the form of straight hexagonal prisms. The prisms are formed by three-sided sheet elements with bent flanges, by means of which adjacent sheet elements are connected.

The cartridge can be provided with additional closing elements intended for closing the honeycomb structure on the sides and from below.

The additional closing elements may be made of single-side sheet elements with bent flanges for connecting adjacent sheet elements.

The sheet elements may have different material thicknesses.

The sheet elements may be made of metal.

The sheet elements may be connected to each other by welding and/or clamps, and/or fasteners, and/or adhesives.

The sheet elements may be made of composite materials.

The sheet elements may have cutouts along the ribs formed by the bent flanges, wherein the connection between the sheet elements to each other is made by interlocking joint.

The sides and/or ribs of the sheet elements may be provided with through holes.

The holes may have different shapes and/or sizes.

Angles α between the sides of the sheet elements and angles β between a side and a flange of the sheet elements may define a selected same and/or different shape of the cell cross-section.

The angles α and β may be equal or tending toward equality.

The angles β may be greater than the angles α.

The angles α may be greater than the angles β.

This constructive embodiment makes it possible to create additional bending angles in the deformation process by incorporating the sides of the sheet elements of the energy-absorbing cartridge. In particular, it makes it possible to eliminate the loss of stability in the absence of a guiding frame.

It also provides a reduction in the weight of the cartridge structure by providing the possibility of changing the technical characteristics of the material used.

### Brief description of the drawings.

Fig. 1 - General view of the energy-absorbing cartridge.
Fig. 2 - Stages (a, b, c, d) of assembly of the energy-absorbing cartridge.
Fig. 3 - 5 - General view of the segments of the energy-absorbing cartridge.
Fig. 6 - General view of an energy-absorbing cartridge with segments of different thicknesses.
Fig. 7 - General view of an energy-absorbing cartridge having segments supplemented with holes.
Fig. 8 (a) - 8(e) - General view of energy-absorbing cartridge segments with holes of different shapes and arrangements.

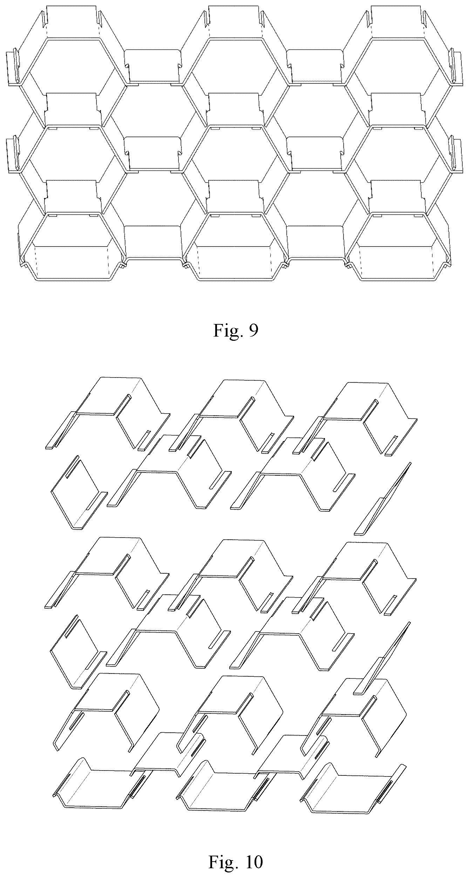

Fig. 9 - General view of an energy-absorbing cartridge assembled by means of the interlocking joint.
Fig. 10 - General view of energy-absorbing cartridge segments made with cutouts along the ribs.
Fig. 11 - Example of the steps (a, b, c, d, e, f, g, h, i) of buckling of the claimed energy-absorbing cartridge.
Fig. 12 - View of an example of buckling of the claimed energy-absorbing cartridge.
Fig. 13 - View of an embodiment of an energy-absorbing cartridge, the sheet elements of which are formed in a different shape by changing the angles α and β.
Fig. 14 - Graph of deformation of the cartridge.

### Embodiment of the invention.

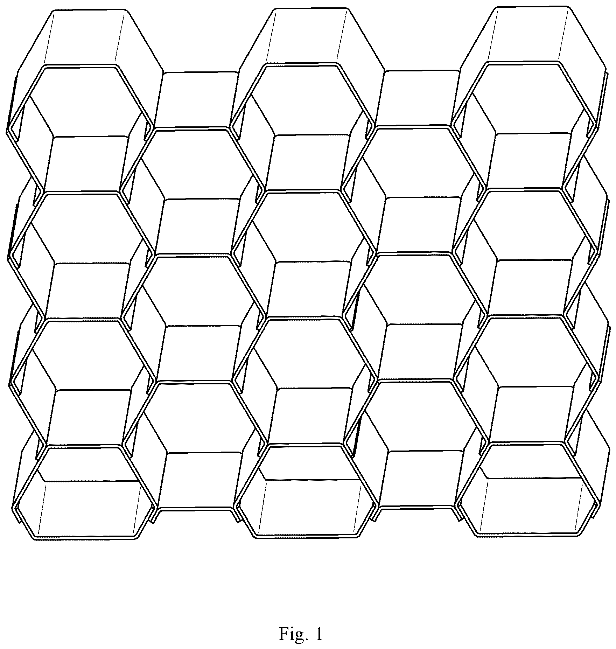

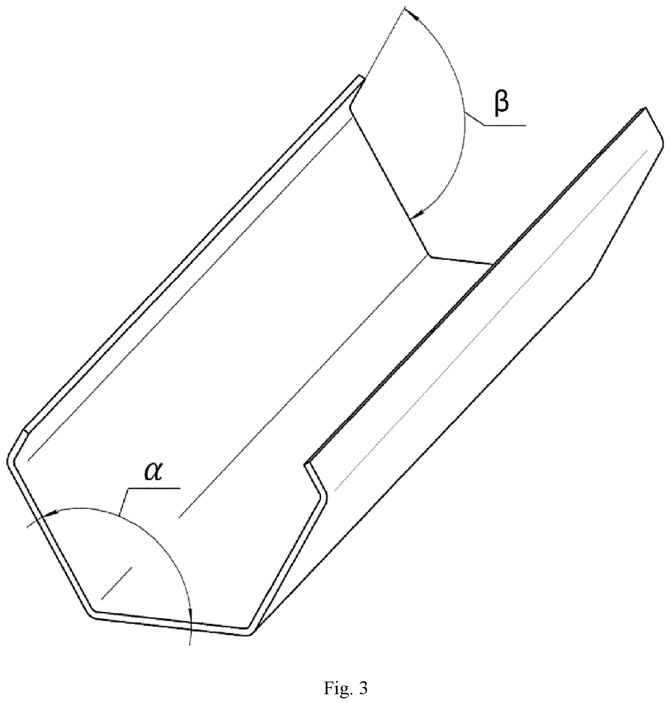

As shown in Figs. 1 - 3, the cartridge is made of three-sided sheet elements (1) with bent flanges for connecting adjacent sheet elements. The sheet elements are interconnected to form cells in the form of a straight hexagonal prism. The flanges of the sheet elements provide additional points of deformation on the sides of the sheet elements.

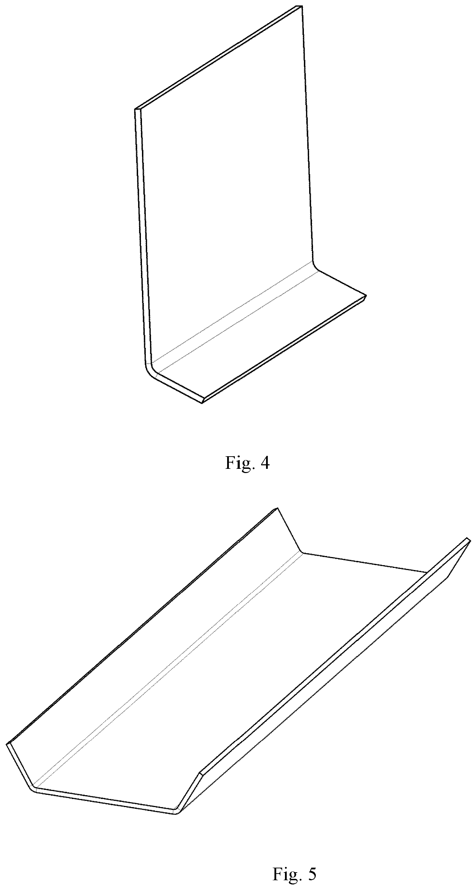

According to Figs. 1, 2, 4, 5, the cartridge may be provided with additional closing sheet elements (2, 3, 4) which are also made with a flange or flanges for connection to the three-sided sheet elements (1) or to each other. In particular, additional closing sheet elements (3, 4) with bent flanges are provided in the lower part of the cartridge for closing the cross-section of the hexagonal prism inwards and/or between the three-sided sheet elements (1). In the gap between the three-sided sheet elements (1) in the side part of the cartridge for closing the hexagonal prism cross-section between the three-sided sheet elements (1), additional closing elements (2) with bent flanges are installed.

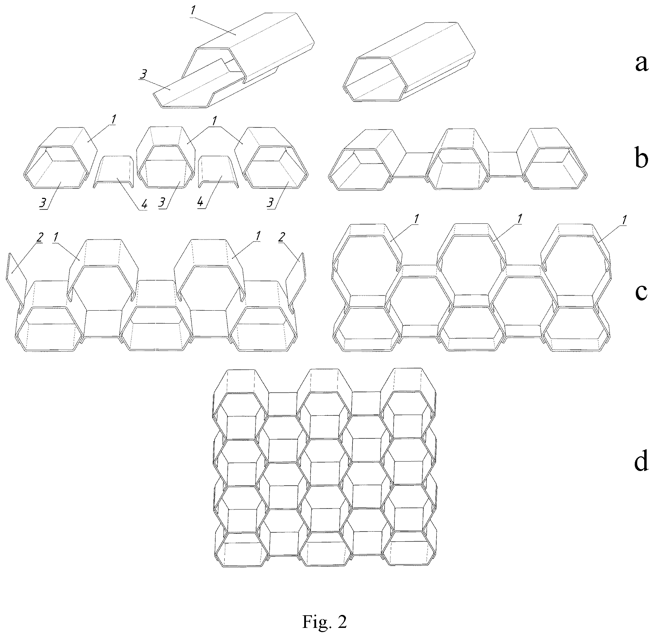

An example of the steps of the assembly process of the energy-absorbing cartridge is shown in Fig. 2, but this process can be performed without the use of the additional closing sheet elements (2 - 4).

The three-sided sheet elements (1) and the additional closing sheet elements (2, 3, 4) may be made of materials having different physical and mechanical properties. In particular, the sheet elements (1 - 4) may be made of different metals and/or composite materials.

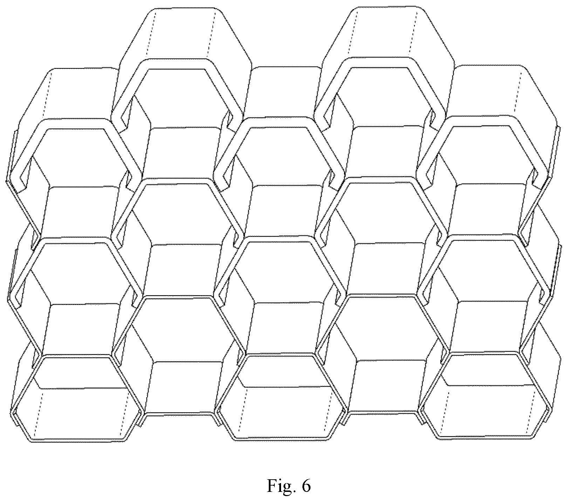

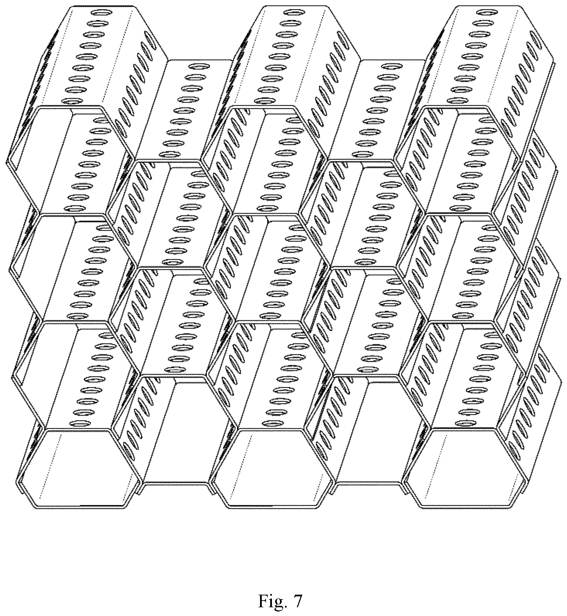

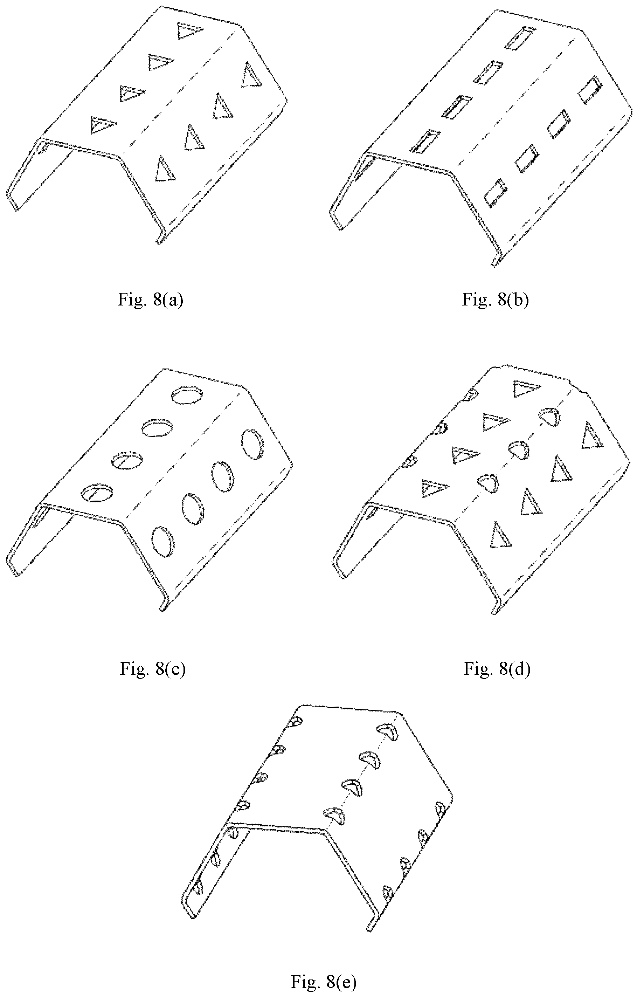

The sheet elements (1 - 4) may have different thicknesses (Fig. 6), they may be perforated (Figs. 7 - 8 (e)), stamped, and the sheet elements (1 - 4) may be connected to each other by welding, clamps (e.g., collet clamps, hand clamps, etc.), fasteners (e.g., rivets, bolts, screws, etc.), adhesives, clips, ties, and any other available means of connection to each other.

The sheet elements (1 - 4) may have cutouts along the ribs formed by the bent flanges, and the connection between the sheet elements (1 - 4) may be made by means of interlocking joint, and such connection may be supplemented by additional connection by means of welding, bolts, clips, ties, adhesives and any other available means of connection between each other.

When assembled, the sheet elements (1 - 4) form a hexagonal honeycomb, and the entire cartridge is formed from a matrix of straight hexagonal honeycombs. The sheet elements (1 - 4) may form the same and/or different cross-sectional shape of the cells formed by selecting angles α and β. The angle α characterizes the angle between the sides of the sheet elements (1 - 4), and the angle β characterizes the angle between the side and the flange of the sheet elements (1 - 4). The angles α, as well as the angles β, may differ from one another (in particular have differences of ±10 degrees). The angles α and β can be equal to each other or different from each other.

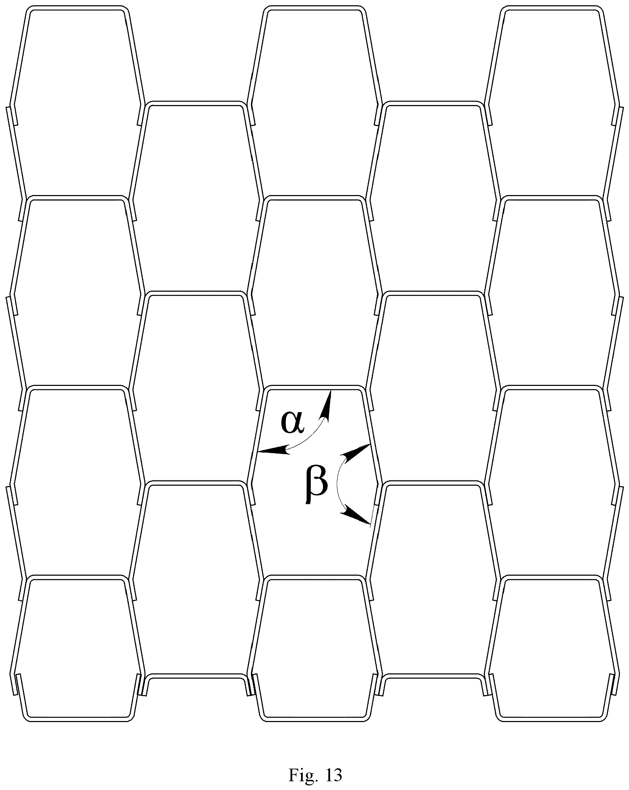

It should be noted that if the energy-absorbing cartridge will mainly take only frontal load, it is advisable to make the angle β greater than the angle α, up to the fact that the angle β may tend to 180 degrees (180 ±20 degrees), and the angle α to 90 degrees (90 ±10 degrees), which can increase the energy capacity of the cartridge up to 65% (Fig. 13). In particular if β =160 degrees, then α = 100 degrees. However, if the cartridge is to support loads directed at an angle to the frontal plane of the cartridge, it is more appropriate to use angles α and β equal to each other or tending to equality, namely 120 ±20 degrees, for example 110 and 140 degrees, respectively. In some situations it is reasonable to make the angle α larger than the angle β, up to the fact that the angle α may tend to 180 degrees (160 - 180 degrees), and the angle β to 0 degrees (0 - 40 degrees). In particular if α =160 degrees, then β =40 degrees.

Sheet elements can be joined by means of an element of different shape and cross-section, shape and merchant rolled, providing a stable connection of segments with each other.

Such execution allows to set in the manufacture of the cartridge necessary for a particular case characteristic of deformation of the device, for example, the nature, force and time of deformation of the device in which the cartridge is used, which takes frontal or lateral force from the impact of the vehicle, varying such parameters of the cartridge, such as the angle of inclination of the sides of the sheet elements (1 - 4) of the cartridge relative to each other, the thickness of the sheet elements (1 - 4), the use of sheet elements (1 - 4) of metals possessing different physical and mechanical properties.

The use of different steel grades in particular allows to change the initial value of the elastic limit to a greater or lesser extent, in order to reduce/increase the total energy capacity of the cartridge while maintaining the mass of the energy-absorbing cartridge, and to achieve the necessary values of ASI overloads.

The use of perforations on the segment sides in particular makes it possible to reduce the mass of the energy-absorbing cartridge, while the energy capacity of the energy-absorbing cartridge with such segments remains unchanged, since in the process of deformation the energy that is spent to overcome the elasticity limit of the material is absorbed by the corners of the section. In such a case, the side connecting the two corners is not subjected to deformation. At the same time, reducing the mass of segments included in the energy-absorbing cartridge allows changing the thickness of sheet elements or increasing their number, thereby further increasing the total energy capacity of the energy-absorbing cartridge.

The use of materials with different thicknesses makes it possible to change the initial value of the elastic limit upwards or downwards in order to reduce/increase the ASI overload value.

### The device operates as follows.

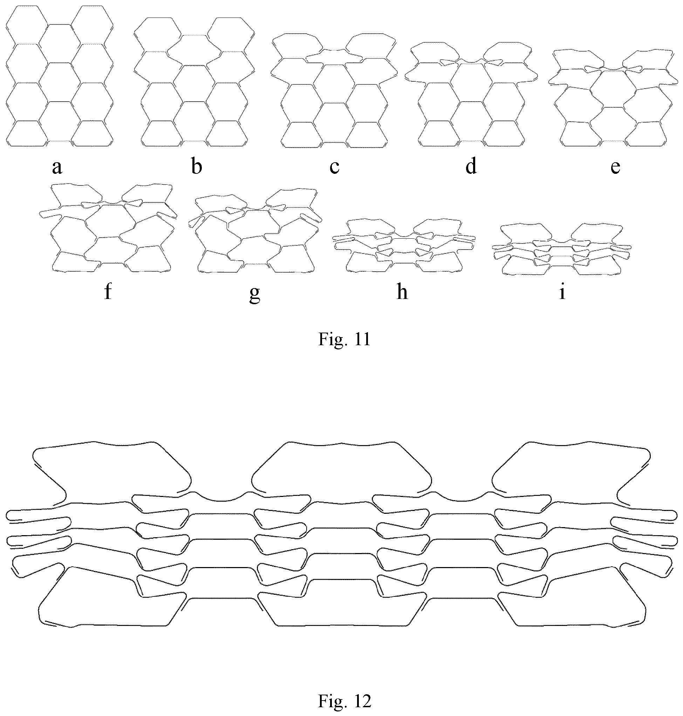

Fig. 11 shows an example of buckling of the claimed energy-absorbing cartridge. The direction of the external force vector is set perpendicular to the danger plane of the cellular prism (along the longitudinal axis of the cartridge to the end part). The applied energy is dissipated in the edges of the section during opening and closing of the inner corners of one section of the 6-corner prism to overcome the elastic limit of the material, where the kinetic energy of the impacting objects is absorbed.

Auxiliary to this, due to bending deformations of elements at locations of maximum danger and bending deformations of flat sides under the influence of plate bearing with initial danger of adjacent cells, it also additionally absorbs kinetic energy.

At the initial moment of impact of force on the cartridge, (Fig. 11.a) there is not a long period of elastic limit, which allows to resist the increasing deformation force. Since the generally interconnected three-sided sheet elements create a strong structural cell, the neighboring sides of which are supported in each other, a rigid structure is created.

During the initial stage of deformation after overcoming the elastic limit, the initial cells of the straight hexagonal prism form, located on the edges of the cartridge, are subjected to deformation, because in relation to the subsequent cells the elastic limit has already been overcome, and the process of plastic deformation has begun (Fig. 11.b).

At the same time, the middle cell, located between the end cells, which is directly supported by the initial end cells, is subsequently subjected to plastic deformation, because they transmit the force from the source of impact (Fig. 11.c).

The next step is a repetition of the step in Fig. 11 b, where the following row of edge cells after the initial cells are subjected to deformation, since the force is transmitted from the previous row of cells from the source of impact (Fig. 11.d).

Further, after deformation of the end cells of the next row after the initial one, the middle cell is deformed according to the same principle as in the step of Fig. 11.c.

Further the deformation process is repeated and indicates the sequence of deformation of each of the following rows, since as it was stated above each following row in relation to the previous one has a higher elastic limit, but as each following row is included in the plastic deformation process it allows to determine exactly how many rows in the cartridge will be required for complete dissipation of the deformation energy.

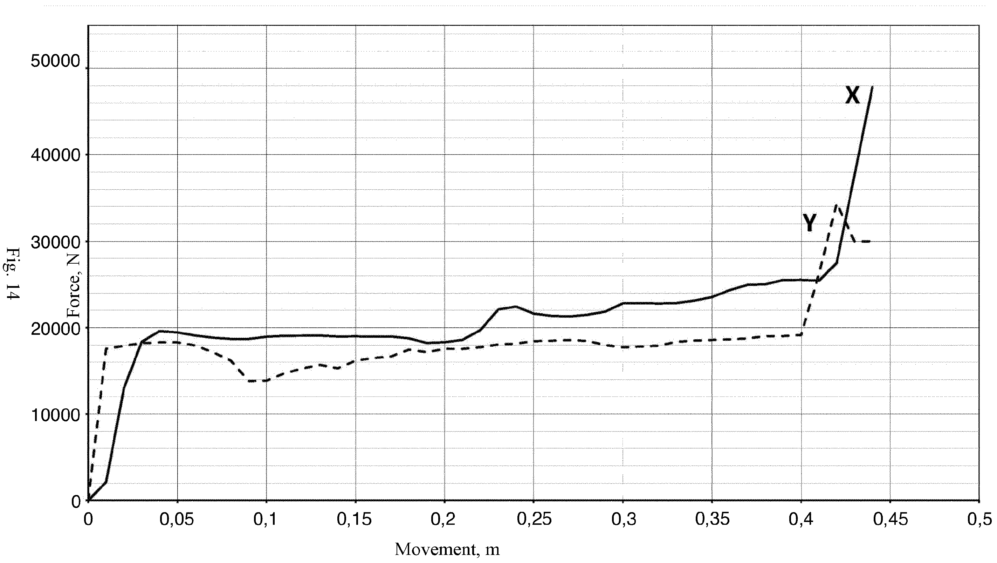

In Fig. 14, the dotted line (Y) indicates the deformation graph of the cartridge, whose honeycomb is made of hexagonal solid prisms in accordance with the closest analog, and the solid line (X) indicates the deformation graph of the cartridge, whose honeycomb is made of three-sided sheet elements (1 - 4) in accordance with the present invention.

The experiments were carried out on a bench where the operation of the front attenuator was simulated, in particular when one end of the cartridge was rigidly fixed and a force was continuously applied to the opposite end causing deformation of the cartridge. During the deformation of the cartridge, the fixation of the force from displacement was carried out, which is reflected in the presented graph.

The experiment results showed that for the same prism sizes, the same angles α and β, the same steel grades or alloy grades, the same thickness of the hexagonal solid prism and three-sided sheet elements with bent flanges, the value of energy capacity of the cartridge made of three-sided sheet elements (1 - 4), 14% more than the cartridge made of hexagonal solid prisms. At the same time, the mass of the cartridge made of three-sided sheet elements (1 - 4) with bent flanges is 22% less than that of the cartridge made of hexagonal solid prisms.

The more bending moments generated during the deformation process, the faster the attenuation of the energy needed to overcome the elastic limit occurs.

The elements come into operation sequentially as the directional force is applied and a large number of them operate while in different phases of deformation. When deformation occurs, the flanges of the sheet elements (1 - 4) of the cartridge impact the neighboring sheet elements (1 - 4), deforming them and thereby creating an additional deformation zone.

As the cartridge deformation occurs, at its initial moment, the total value of the elastic limit of the cartridge as a whole corresponds to the necessary value of the external force energy for its complete absorption, because as the cartridge deforms as a whole, the external force energy tends to zero after successive inclusion in the work of each subsequent row.

## Claims

1. Energy-absorbing cartridge made in the form of a honeycomb structure, the cells of which are made in the form of straight hexagonal prisms, **characterized in that** the cells are formed by three-sided sheet elements with bent flanges by means of which adjacent sheet elements are connected.

2. The cartridge according to claim 1, **characterized in that** it comprises additional closing sheet elements for closing the honeycomb structure on the sides and at the bottom.

3. The cartridge according to claim 2, **characterized in that** the additional closing sheet elements are made of sheet elements having a bent flange or flanges for connecting adjacent sheet elements.

4. The cartridge according to any of claims 1 to 3, **characterized in that** the sheet elements have different material thicknesses.

5. The cartridge according to any of claims 1 to 3, **characterized in that** the sheet elements are made of metal.

6. The cartridge according to claim 5, **characterized in that** the connections between the sheet elements to each other are made by welding and/or clips and/or fasteners and/or adhesives.

7. The cartridge according to any of claims 1 to 3, **characterized in that** the sheet elements are made of composite materials.

8. The cartridge according to claim 7, **characterized in that** the connections between the sheet elements to each other are made by welding and/or clips and/or fasteners and/or adhesives.

9. The cartridge according to any of claims 1 to 8, **characterized in that** the sheet elements have cutout along the ribs formed by the bent flanges, wherein the connections between the sheet elements with each other are made by means of interlocking joint.

10. The cartridge according to any of claims 1 to 9, **characterized in that** the sides and/or ribs of the sheet elements have through holes.

11. The cartridge according to claim 10, **characterized in that** the holes have different shapes and/or sizes.

12. The cartridge according to any of claims 1 to 11, **characterized in that** the angles α between the sides of the sheet elements and the angles β between a side and a flange of the sheet elements define a selected same and/or different shape of the cell cross-section.

13. The cartridge according to claim 12, **characterized in that** the angles α and β are equal or tend to be equal.

14. The cartridge according to claim 12, **characterized in that** the angles β are greater than the angles α.

15. The cartridge according to claim 12, **characterized in that** the angles α are greater than the angles β.
